(19) Europäisches Patentamt
European Patent Office
Office européen des brevets

(11) EP 1 103 566 A1

(12) **EUROPEAN PATENT APPLICATION**

(43) Date of publication:
**30.05.2001 Bulletin 2001/22**

(51) Int Cl.7: **C08F 4/70**, C08F 36/06, C08F 2/34

(21) Application number: **00309685.6**

(22) Date of filing: **02.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.11.1999 US 447668**

(71) Applicant: **UNION CARBIDE CHEMICALS & PLASTICS TECHNOLOGY CORPORATION**
**Danbury, Connecticut 06817-0001 (US)**

(72) Inventor: **Zhang, Minghui**
**Edison, New Jersey 08817 (US)**

(74) Representative: **Hayes, Adrian Chetwynd et al**
**Boult Wade Tennant,**
**Verulam Gardens**
**70 Gray's Inn Road**
**London WC1X 8BT (GB)**

(54) **Nickel-based catalyst and gas phase polymerization process for polybutadiene**

(57) There is provided a catalyst comprising an organonickel compound, an alkyl aluminum compound, and a boron trifluoridephenol complex and process for the production of polybutadiene in a gas phase polymerization.

EP 1 103 566 A1

## Description

### Field of the Invention

The invention relates to nickel-based catalysts for the production of polybutadiene. More particularly, the present invention relates to a novel nickel-based catalyst and its use in a gas phase fluidized bed polymerization process employing butadiene as the monomer.

### Background of the Invention

Commercially, polydienes such as polybutadiene and polyisoprene are produced in solution, slurry, or bulk polymerizations. Recently, it has been disclosed that such polymers can be produced in a gas phase process such as those conducted in a gas fluidized bed reactor. Such processes are described, for example, in U.S. Patent Nos. 4,994,534 and 5,453,471; and in WO 96/04322 and 96/04323. In general, these gas phase processes are more environmentally acceptable and can operate at lower costs as compared to solution, slurry or bulk processes. But, more importantly, a polymer is produced which is granular in form and flowable upon leaving the gas phase reactor.

Attempts have been made to adapt the catalysts employed in solution, slurry, and bulk processes for polymerization in these gas phase fluidized bed processes with limited success. However, these catalysts, both supported and unsupported, have unacceptably low catalyst activity, require unacceptably high levels of cocatalyst when employed in a polymerization, and/or do not produce a granular or flowing polymer product. Many of the catalysts that have demonstrated better catalyst activity and that produce a granular, flowing polymer product have labor intensive and time-consuming preparation steps and are difficult to feed in a full-scale commercial gas phase operation.

Hence, there is an on-going need for a catalyst that is simple to prepare, that has an acceptable activity level for commercial polymerization, and that produces a granular, free-flowing polymer in order to reduce operation costs.

### Summary of the Invention

Accordingly, there is provided a catalyst comprising an organonickel compound (precursor), and alkyl aluminum compound (cocatalyst), and a boron trifluoride-phenol complex. There is also provided a process for preparing polybutadiene (e.g., 1,4-cis-polybutadiene) comprising polymerizing butadiene (e.g., 1,3-butadiene) in a gas fluidized reactor under polymerization conditions in the presence of an inert particulate material using a catalyst comprising: an organonickel compound, an alkyl aluminum compound, and a boron trifluoride-phenol complex.

### Detailed Description of the Invention

Catalyst. The catalyst of the invention comprises an organonickel compound (precursor), and alkyl aluminum compound (cocatalyst), and a boron trifluoride-phenol complex.

Nickel component. The catalyst employed in the polymerization contains a nickel compound. Nickel compounds of the catalyst are organonickel compounds of nickel with mono- or bi- dentate organic ligands containing up to 20 carbon atoms. "Ligand" is defined as an ion or molecule bound to and considered bonded to a metal atom or ion. Mono-dentate means having one position through which covalent or coordinate bonds with the metal may be formed; bi-dentate means having two positions through which covalent or coordinate bonds with the metal may be formed. The organonickel compounds are generally soluble in inert solvents. Thus, any salt of an organic acid containing from about 1 to 20 carbon atoms may be employed. Representative of organonickel compounds are nickel benzoate, nickel acetate, nickel naphthenate, nickel octanoate, nickel neodecanoate, nickel 2-ethylhexanoate, bis(π-allyl nickel), bis(π-cycloocta-1,5-diene), bis(π-allyl nickel trifluoroacetate), bis(α-furyl dioxime) nickel, nickel palmitate, nickel stearate, nickel acetylacetonate, nickel salicaldehyde, bis(salicyladehyde) ethylene diimine nickel, bis(cyclopentadiene) nickel, cyclopentadienylnickel, nitrosyl and nickel tetracarbonyl. The preferred nickel is a nickel salt of a carboxylic acid or an organic complex compound of nickel.

Cocatalyst Component. Co-catalysts that can be employed with the component containing nickel are organoaluminum compounds. Any organoaluminum having the formula:

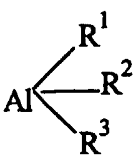

wherein $R^1$ is selected from the group consisting of alkyl, cycloalkyl, aryl, alkaryl, arylalkyl, alkoxy, hydrogen and fluorine; $R^2$ and $R^3$ are the same or different and are selected from the group consisting of alkyl, cycloalkyl, aryl, alkaryl, and arylalkyl. The ratio of Al/Ni may be varied between about 1:1 to 500:1, preferably between about 2:1 to 100:1, and most preferably about 5:1 to 25:1.

Representative of compounds corresponding to the formula are diethyl aluminum fluoride, di-n-propyl aluminum fluoride, di-n-butyl aluminum fluoride, diisobutyl aluminum fluoride, dihexyl aluminum fluoride, dioctyl aluminum fluoride, and diphenyl aluminum fluoride. Also included are diethyl aluminum hydride, di-n-propyl aluminum hydride, di-n-butyl aluminum hydride, diisobutyl aluminum hydride, diphenyl aluminum hydride, di-p-tolyl aluminum hydride, dibenzyl aluminum hydride, phenyl ethyl aluminum hydride, phenyl-n-propyl aluminum hydride, p-tolyl ethyl aluminum hydride, p-tolyl n-propyl aluminum hydride, p-tolyl isopropyl aluminum, benzyl ethyl aluminum hydride, benzyl n-propyl aluminum hydride, and benzyl isopropyl aluminum hydride and other organoaluminum hydrides. Also included are trimethyl aluminum, triethyl aluminum, tri-n-propyl aluminum, triisopropyl aluminum, tri-n-butyl aluminum, triisobutyl aluminum, tripentyl aluminum, trihexyl aluminum, tricyclohexyl aluminum, trioctyl aluminum, triphenyl aluminum, tri-p-tolyl aluminum, tribenzyl aluminum, ethyl diphenyl aluminum, ethyl di-p-tolyl aluminum, ethyl dibenzyl aluminum, diethyl phenyl aluminum, diethyl --tolyl aluminum, diethyl benzyl aluminum and other triorganoaluminum compounds. Also included are diethylaluminum ethoxide, diisobutylaluminum ethoxide and dipropylaluminum methoxide. Mixtures of these organoaluminum compounds can also be employed in the invention. Of these organoaluminum compounds triethylaluminum (TEAL), triisobutylaluminum (TIBA), diethyl aluminum chloride (DEAC), partially hydrolyzed DEAC, methylaluminoxane (MAO), modified methylaluminoxane (MMAO), and mixtures of them are preferred.

When MAO or MMAO is employed as the co-catalyst, it may be activated by one of the following: (a) branched or cyclic oligomeric poly(hydrocarbylaluminum oxide)s which contain repeating units of the general formula $-(Al(R''')O)-$, where $R'''$ is hydrogen, an alkyl radical containing from 1 to about 12 carbon atoms, or an aryl radical such as a substituted or unsubstituted phenyl or naphthyl group; (b) ionic salts of the general formula $[A^+][BR^*_4-]$, where $A^+$ is a cationic Lewis or Bronsted acid capable of abstracting an alkyl, halogen, or hydrogen from the transition metal component of the catalyst, B is boron, and R* is a substituted aromatic hydrocarbon, preferably a perfluorophenyl radical; and (c) boron alkyls of the general formula $BR^*_3$, where R* is as defined above.

Aluminoxanes are well known in the art and comprise oligomeric linear alkyl aluminoxanes represented by the formula:

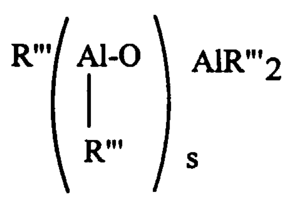

and oligomeric cyclic alkyl aluminoxanes of the formula:

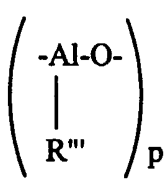

wherein <u>s</u> is 1 to 40, preferably 10 to 20; <u>p</u> is 3 to 40, preferably 3 to 20; and $R'''$ is an alkyl group containing 1 to 12 carbon atoms, preferably methyl or an aryl radical such as a substituted or unsubstituted phenyl or naphthyl radical. Modified methylaluminoxane is formed by substituting 20-80 wt% of the methyl groups with a $C_2$ to $C_{12}$ group, preferably with isobutyl groups, using techniques known to those skilled in the art.

<u>Promoter</u>. Promoters that can be used with the component containing nickel include a boron trifluoride ($BF_3$)-phenol complex. The $BF_3$:Al ratio may be varied between about 0.5:1 to 3:1, preferably about 0.5:1 to 2:1, and most preferably about 0.6:1 to 1.5:1.

The boron trifluoride phenol complex utilizes a phenol having the formula:

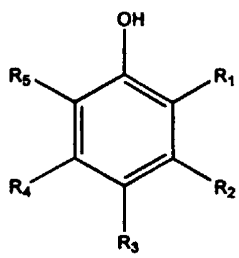

A phenol is a substance that has a hydroxyl group attached to a carbon atom on an aromatic ring via a single bond. Normally, an aromatic ring is a benzene with or without one or more hydrogen atoms being substituted by other organic groups. $R_1$ through $R_5$ at each occurrence represent hydrogen, alkyl, cycloalkyl, aryl, alkaryl, and arylalkyl, each containing 1 to about 30 carbon atoms, preferably 0 to 10 carbon atoms, most preferably 0 to 5 carbon atoms; wherein $R_1$ through $R_5$ may be the same or different. $R_1$ through $R_5$ may also be joined together through one or more common carbon bonds to form a cyclic phenol, that is either aromatic or non-aromatic.

Representative but not exhaustive of phenols that may be used in $BF_3$-phenol complexes in this invention are phenol, o-cresol, p-cresol, 2-ethylphenol, 2-propylphenol, 2-isopropylphenol, 2-sec-butylphenol, 2-tert-butylphenol, 2-cyclopentylphenol, 3-isopropylphenol, 3-sec-butylphenol, 3-tert-butylphenol, 3-pentylphenol, 3-pentadecylphenol, 4-ethylphenol, 4-propylphenol, 4-isopropylphenol, 4-sec-butylphenol, 4-tert-butylphenol, 4-cyclopentylphenol, 4-tert-amylphenol, 4-octylphenol, 4-(1-adamantyl)phenol, 2,3-dimethylphenol, 5,6,7,8-tetrahydrol-naphthol, 2,6,-dimethylphenol, 2,4,6-trimethylphenol, 2,4,6-triphenylphenol, 1-naphthol, 2-naphthol, 2-phenolphenol, 4-phenylphenol, 4-benzylphenol, 2,3,4,5,6-pentamethylphenol. For this invention, the preferred phenol is a less substituted one such as one selected from the group consisting of phenol, o-cresol, p-cresol, 2-ethylphenol, 4-ethylphenol and most preferred is an unsubstituted one, for example, phenol.

Support. Optionally a support can be present. When the catalyst is supported, typical supports can include, for example, silica, alumina, carbon black, porous crosslinked polypropylene, porous crosslinked polystyrene, activated carbon, magnesium chloride, and mixtures of these support materials. Of these support materials, carbon black and silica and mixtures of these two support materials are preferred. Such support materials and how to make them is generally well known. The support material employed is essentially inert to the other reactants and gases employed in the polymerization process. Typically the support material is employed as a dry powder having an average particle size of about 10 to about 250 microns, and preferably has an average particle size ranging from about 30 to about 100 microns. Suitable support materials have a surface area of at least about 200 $m^2$/gm, a pore size of at least about 100 Angstroms, preferably at least about 200 Angstroms. Generally, the amount of support material used is that which will provide about 0.1 to about 1.0 millimoles of metal precursor per gram of support. When a support is employed, the nickel to support material ratio ranges from about 0.05 to 2 mmol of nickel per gram of support material, preferably from about 0.1 to 1 mmol of nickel per gram of support.

To prepare a supported catalyst, typically the nickel component and support material (e.g., silica) are placed in a hydrocarbon solvent diluent such as hexane. Preferably, a small amount of butadiene (not more than about 5 equivalents) is added. Then the cocatalyst (aluminum alkyl) and $BF_3$-phenol complex are added with stirring. The solid is separated from the liquid diluent or solvent by filtration and optionally dried using means known to those skilled in the art.

In the catalyst of the present invention, the mole ratio of nickel:aluminum:boron (i.e., $BF_3$-phenol complex) ranges from about 1:1:0.5 to 1:500:1500, preferably 1:2:1 to 1:100:200, most preferably 1:5:3 to 1:25:37.5.

Polymerization Processes and Conditions. The present invention is not limited to any specific type of stirred or fluidized gas phase polymerization reaction and can be carried out in a single reactor or multiple reactors (two or more reactors preferably connected in series). In addition to well-known conventional gas phase polymerizations processes, "condensed mode", including the so-called "induced condensed mode", and "liquid monomer" operation of a gas phase polymerization reactor can be employed.

A conventional fluidized bed process for producing resins is practiced by passing a gaseous stream containing one or more monomers, usually one monomer, continuously through a fluidized bed reactor under reactive conditions in the presence of a nickel catalyst. Product is withdrawn from the reactor. A gaseous stream of unreacted monomer is withdrawn from the reactor continuously and recycled into the reactor along with make-up monomer added to the recycle stream. Conventional gas phase polymerizations are disclosed, for example, in U.S. Patent Nos. 3,922,322; 4,035,560; and 4,994,534. Optionally, and preferably, a conventional polymerization of the present invention is conducted in the presence of one or more inert particulate materials as described in U.S. Patent No. 4,994,534.

Condensed mode polymerizations are disclosed in U.S. Patent Nos. 4,543,399; 4,588,790; 4,994,534; 5,352,749; and 5,462,999. Condensing mode processes are employed to achieve higher cooling capacities and, hence,

higher reactor productivity. In these polymerizations a recycle stream, or a portion thereof, can be cooled to a temperature below the dew point in a fluidized bed polymerization process, resulting in condensing all or a portion of the recycle stream. The recycle stream is returned to the reactor. The dew point of the recycle stream can be increased by increasing the operating pressure of the reaction/recycle system and/or increasing the percentage of condensable fluids and decreasing the percentage of non-condensable gases in the recycle stream. The condensable fluid may be inert to the catalyst, reactants and the polymer product produced; it may also include monomers and comonomers. The condensing fluid can be introduced into the reaction/recycle system at any point in the system. Condensable fluids include saturated or unsaturated hydrocarbons. In addition to condensable fluids of the polymerization process itself, other condensable fluids, inert to the polymerization can be introduced to "induce" condensing mode operation. Examples of suitable condensable fluids may be selected from liquid saturated hydrocarbons containing 2 to 8 carbon atoms (e.g., ethane, propane, n-butane, isobutane, n-pentane, isopentane, neopentane, n-hexane, isohexane, and other saturated $C_6$ hydrocarbons, n-heptane, n-octane and other saturated $C_7$ and $C_8$ hydrocarbons, and mixtures thereof). Condensable fluids may also include polymerizable condensable comonomers such as olefins, alpha-olefins, diolefins, diolefins containing at least one alpha olefin, and mixtures thereof. In condensing mode, it is desirable that the liquid entering the fluidized bed is dispersed and vaporized quickly.

Liquid monomer polymerization mode is disclosed in U.S. Patent No. 5,453,471; U.S. Serial No. 510,375; PCT 95/09826 (US) and PCT 95/09827 (US). When operating in the liquid monomer mode, liquid can be present throughout the entire polymer bed provided that the liquid monomer present in the bed is adsorbed on or absorbed in solid particulate matter present in the bed, such as in/on polymer being produced or fluidization aids, also known as inert particulate materials (e.g., carbon black, silica, clay, talc, and mixtures thereof) present in the bed, so long as there is no substantial amount of free liquid monomer present. Liquid mode makes it possible to produce polymers in a gas phase reactor using monomers having condensation temperatures much higher than the temperatures at which conventional polyolefins are produced.

In general, a liquid monomer process is conducted in a stirred bed or gas fluidized bed reaction vessel having a polymerization zone containing a bed of growing polymer particles. The process comprises continuously introducing a stream of monomer (1,3-butadiene) and optionally one or more inert gases into the polymerization zone optionally in the presence of one or more inert particulate materials; continuously or intermittently introducing a catalyst as described herein into the polymerization zone; continuously or intermittently withdrawing polymer product from the polymerization zone; and continuously withdrawing unreacted gases from the zone; compressing and cooling the gases while maintaining the temperature within the zone below the dew point of at least one monomer present in the zone. Since there is only one monomer present in the gas-liquid stream, there is also present at least one inert gas. The inert gas can include nitrogen, argon, a $C_1$-$C_{20}$ alkane, and mixtures thereof, with nitrogen, butane, or a mixture of these two being preferred. Typically, the temperature within the zone and the velocity of gases passing through the zone are such that essentially no liquid is present in the polymerization zone that is not adsorbed on or absorbed in solid particulate matter. The use of fluidization aids is preferred in the liquid monomer process and in the process of the present invention. In view of the dew points or condensation temperatures of the monomer employed in the gas phase polymerization process of the present invention, liquid monomer mode is the preferred polymerization mode.

In general, polybutadiene (e.g., high cis 1,4-polybutadiene) is produced in a gas-phase fluidized reactor at or above the softening or sticking temperature of the polymer product optionally and preferably in the presence of an inert particulate material selected from the group consisting of carbon black (including modified and treated carbon black), silica, clay, talc, activated carbon, and mixtures thereof. Of the inert particulate materials, carbon black, silica, and a mixture thereof are preferred, with carbon black being most preferred. The inert particulate material is employed in the gas-phase polymerization in an amount ranging from about 0.3 to about 80 weight percent, preferably about 5 to about 75 weight percent, most preferably 5 to 50 weight percent based on the weight of the final elastomeric polymer product. Other inert particulate materials (especially carbon blacks) that can be employed are disclosed in U.S. Patent Nos. 5,162,463 and 5,200,477; WO 98/34960; U.S. Serial Nos. 09/342,706 (D-17851) and 09/343,169 (D-17945).

Generally, all of the above modes of polymerizing are carried out in a gas phase fluidized bed made up of or containing a "seed bed" of polymer which is the same or different from the polymer product being produced. The bed is preferably made up of the same granular resin that is to be produced in the reactor. Thus, during the course of the polymerization, the bed comprises formed polymer particles, growing polymer particles, and catalyst particles fluidized by polymerizing and modifying gaseous components introduced at a flow rate or velocity sufficient to cause the particles to separate and act as a fluid.

The fluidizing gas is made up of the initial feed, make-up feed, and cycle (recycle) gas, i.e., monomers, and, if desired, modifiers and/or an inert carrier gas (e.g., nitrogen, argon, or inert hydrocarbon (e.g., a $C_1$-$C_{20}$ alkane such as ethane or butane), with nitrogen and/or butane being preferred). A typical cycle gas is comprised of one or more monomers, inert carrier gas(es), and optionally hydrogen, either alone or in combination. The process can be carried out in a batch or continuous manner, the latter being preferred. The essential parts of the reactor are the vessel, the bed, the gas distribution plate, inlet and outlet piping, at least one compressor, at least one cycle gas cooler or heat

exchanger, and a product discharge system. In the vessel, above the bed, there is a velocity reduction zone, and in the bed, a reaction zone. Both are above the gas distribution plate.

Variations in the reactor can be introduced if desired. One involves the relocation of one or more cycle gas compressors from upstream to downstream of the cooler and another involves the addition of a vent line from the top of the product discharge vessel (stirred tank product) back to the top of the reactor to improve the fill level of the product discharge vessel.

Polymerization can also be conducted by charging one monomer initially, allowing it to polymerize, and then adding a second monomer, and allowing it to polymerize in a single polymerization vessel. Alternatively, two or more polymerization vessels, preferably connected in series, can be used to polymerize with two or more monomers. Using multiple reactors, one monomer can be polymerized in the first reactor, and additional monomers can be polymerized in second or subsequent reactors.

In general the polymerization conditions in the gas phase reactor are such that the temperature ranges from about 0° to 120°C, preferably about 40° to 100°C, and most preferably about 50° to 80°C. Partial pressure will vary depending upon the particular monomer employed and the temperature of the polymerization, and it can range from about 1 to 125 psi. Condensation temperatures of the monomers are well known. In general, it is preferred to operate at a partial pressure slightly above to slightly below (that is, ± 10 psi) the dew point of the monomer. For example, for butadiene and isoprene-butadiene, the partial pressure ranges from about 10 to about 100 psi; and isoprene partial pressure ranges from about 10 to about 50 psi. For an isoprene polymerization in liquid monomer mode the liquid monomer (isoprene) is maintained at a concentration of about 1 to about 30 wt % of isoprene monomer to polymer in the reactor. Total reactor pressure ranges from about 100 to about 500 psi. Though not a diene, styrene is polymerized analogous to other diene polymerizations such as those of butadiene or ethylidene norbornene. Typically, the process of this invention is operated to have a space-time-yield ratio (STY) of about 1:10. That is, they generally require a longer residence time than alpha olefin polymerizations. The higher the space-time-yield ratio the faster the polymer product is produced in the reactor.

All references cited herein are incorporated by reference.

The invention is illustrated by the examples which follow. All parts and percentages in the specification are by weight unless otherwise specified.

## EXAMPLES

I. Nickel Catalyst Preparation. The following catalyst preparation procedure was used in the examples. The catalyst, cocatalyst and $BF_3$ • (phenol) $_2$ complex were used as purchased.

To a nitrogen dried 50 mL flask equipped with a stir bar was weighed 0.16 g of nickel naphthenate (60% in toluene) (0.2mmol), and 1.0 g of dry silica followed by the addition of 20 mL of dry degassed hexane. Under nitrogen, 2.4 g of butadiene (4.4 mmol) gas was added into the solution. A water bath was used to keep the solution at the ambient temperature. Under stirring, 1.3 mL of 1.56 M triethyl aluminum in hexane (2.0 mmol) was added. After stirring the mixture for 20 minutes, 0.4 mL of $BF_3$ • $(phenol)_2$ (2.0 mol) was added dropwise. After stirring for 3 hours, the mixture was separated by suction filtration under nitrogen. Solid was washed with 3 portions of hexane and dried under nitrogen. A fine powder of pinkish yellow color was obtained as final product (1.2 g).

II. 1.3-Butadiene Polymerization. The polymerization of 1,3-butadiene was carried out in gas phase according to the following procedure: A one liter stirred autoclave was charged with 32 gram of dry carbon black N-650 used as flow aid. The reactor was dried with a flow purge of $N_2$ at 90-100°C. The internal reactor temperature was adjusted to the preferred reaction temperature. Catalyst powder was added into the reactor under nitrogen. The reactor was pressure purged with butadiene and the reactor is then pressurized with 22 psig of monomer to initiate polymerization. A typical catalyst charge was between 0.025 and 0.1 mmol of nickel. The monomer was continuously fed to maintain the initial reactor pressure during the reaction time. The reaction was terminated by injection of a stabilizer package dissolved in alcohol. Conditions and results were set forth in Table 1. The weight of the polymer and flow aid was obtained and the polymer yield determined by subtracting the amount of residual flow aid present as measured by ash content. The polymer microstructure was measured via infrared analysis and polymer molecular weight is measured via both reduced viscosity and GPC analysis.

Reduced viscosity (RV), or reduced specific viscosity, or viscosity number, is a measure of the ability of a polymer to increase the viscosity of a solvent. It is the ratio of the specific viscosity of a solution to the concentration ($c$) of the solute. In a diluted polymer solution, $c$ is usually expressed as grams of polymer per deciliter (dl) of solution. The specific viscosity is obtained by comparing the retention time ($t$) taken for a solution of known concentration to flow between two marks on a capillary tube with the retention time taken by the solvent ($t_o$). The definition is the following:

$$\eta_{sp} = (t - t_o)/t_o$$

$$\eta_{red} = \eta_{sp}/c$$

Reduced viscosity is expressed in the unit of dl/g.

In the present invention, RV is determined by the following procedure: 0.15 g of stabilized flow-aid (carbon black or silica) containing polymer (e.g., polybutadiene) and 50 mL of toluene were added in a 100-mL screw cap bottle. The mixture was shaken overnight at room temperature, separated by first centrifugation, filtered through glass wool, and finally filtered through a Millipore® filter. The solution thus obtained was added in a Cannon-Fenske® Viscometer and retention time was measured at 30 °C. RV is calculated using equation:

$$RV = [(t-t_o)/t_o]/c$$

The concentration *c* was determined by evaporating solvent from an aliquot of 25 mL of the solution and weighing the polymer residue in an aluminum dish.

Examples 1-3 compared the effect of varying TEAL/Ni ratios under same $BF_3$ • (phenol)$_2$/TEAL ratio. Results did not show any significant differences in the catalyst performances (activity, product RV, MW and DI). Thus very low level of triethylaluminum (only a quarter of amount as required in prepoly solution) can be used to prepare the catalyst, a remarkable cost reduction.

Example 4 used the same catalyst as in Example 3. The polymerization time was prolonged to 4 hours. Productivity in terms of unit catalyst was increased.

Examples 3, 5, and 6 compared the effect of varying $BF_3$ • (phenol)$_2$/TEAL ratios under same TEAL/Ni ratio. Results indicated that, as in the cases of prepoly solutions, increasing $BF_3$ • (phenol)$_2$/TEAL ratios resulted in decrease in RV/MW.

Example 7 showed the effect of absence of butadiene (BD) in the preparation of solid catalyst.

III. Separate Additions.

Nickel Catalyst Preparation. The catalyst precursors, nickel naphthenate [Ni(naph)$_2$] and nickel octoate [Ni (oct)$_2$], and co-catalysts, triethyl aluminum (TEAL) and triisobutyl aluminum (TIBA), were used as purchased. $BF_3$ (phenol)$_2$ complex was dissolved in toluene to make a 1M solution.

1.3-Butadiene Polymerization. The polymerization of 1,3-butadiene was carried out in gas phase according to the following procedure: A one liter stirred autoclave was charged with 32 gram of dry carbon black N-650 used as flow aid. The reactor was dried with a flow purge of $N_2$ at 90-100°C. The internal reactor temperature was adjusted to the preferred reaction temperature. The reactor was pressure purged with butadiene and the reactor is then pressurized with 22 psig of monomer. Catalyst components were injected into the reactor under butadiene atmosphere to initiate polymerization. A typical catalyst charge was between 0.025 and 0.1 mmol of nickel. The monmer was continuously fed to maintain the initial reactor pressure during the reaction time. The reaction was terminated by injection of a stabilizer package dissolved in alcohol. Conditions and results were set forth in Table 1. The weight of the polymer and flow aid was obtained and the polymer yield determined by subtracting the amount of residual flow aid present as measured by ash content. The polymer microstructure was measured via infrared analysis and polymer molecular weight is measured via both reduced viscosity and GPC analysis.

A. Three Components Added Separately.

Examples 8 and 9: Catalyst components were added into the gas phase reactor using syringes under BD pressure in the order of Ni(naph)$_2$, TIBA, and $BF_3$(phenol)$_2$ solution.

B. Ni/Al Mixed First, $BF_3$ Separately.

Examples 10 - 13: Ni(naph)$_2$ and TIBA were mixed first. The mixture was injected into the reactor followed by the injection of $BF_3$(phenol)$_2$ solution.

C. Ni/Al Mixed in the Presence of BD First, $BF_3$ Separately.

Examples 14 - 16: Ni(naph)$_2$ and TIBA were mixed in the presence of small amount of butadiene monomer first. The mixture was injected into the reactor followed by the injection of $BF_3$(phenol)$_2$ solution.

D. Ni/Al/$BF_3$, Premixed.

Examples 17 and 18: Three components were mixed prior to the injection into the reactor.

Examples 19 (Comparative): In this example, $BF_3$•$OEt_2$, a non-phenol, was used as promoter. Catalyst components were added into the gas phase reactor using syringes under BD pressure in the order of $Ni(naph)_2$, TIBA, and $BF_3$•$OEt_2$ solution at the ratio of Ni/Al/BF3 = 1/40/40. Only a trace of polymer was obtained after 1 hour.

Table 1. Results of Butadiene Polymerization Using Ni-Based Solid Catalysts

| Example | Ni/Cat mmol/g | Al/Ni | $BF_3$/Ni | BD/Ni | Activity gBR/mmol.hr | Productivity gBR/gCat | RV | %Cis | Mw (x1000) | DI |
|---|---|---|---|---|---|---|---|---|---|---|
| 1* | 0.08 | 20 | 1 | 16 | 1680 | 134 | 3.4 | 97 | 757 | 4.3 |
| 2 | 0.17 | 10 | 1 | 22 | 1960 | 335 | 3.6 | 98 | 814 | 4.6 |
| 3 | 0.28 | 5 | 1 | 13 | 1650 | 463 | 3.3 | 98 | 726 | 4.1 |
| 4 | 0.28 | 5 | 1 | 13 | 1010 | 1137 | 4.0 | 98 | 823 | 4.2 |
| 5 | 0.37 | 5 | 1.5 | 13 | 1750 | 645 | 3.4 | 98 | 730 | 4.1 |
| 6 | 0.33 | 5 | 2 | 16 | 1450 | 480 | 3.2 | 98 | 656 | 4.0 |
| 7 | 0.67 | 10 | 1 | 0 | 390 | 264 | 3.8 | 98 | 922 | 4.3 |

*a pink solid

Table 2. Results of Butadiene Polymerization Using Nickel Catalysts without Prepoly

| Example | Al/Ni | $BF_3$/Al | Activity gBR/mmol•hr | RV | %Cis | Mw (x1000) | DI |
|---|---|---|---|---|---|---|---|
| 7 | 20 | 1 | 550 | 2.8 | 98 | 632 | 4.0 |
| 8 | 40 | 1 | 870 | 4.0 | 98 | 836 | 4.0 |
| 9 | 10 | 4 | 1330 | 1.8 | 97 | 414 | 4.4 |
| 10 | 20 | 1 | 520 | 3.9 | 98 | 987 | 3.9 |
| 11 | 20 | 2 | 980 | 2.5 | 97 | 524 | 3.8 |
| 12 | 20 | 1 | 610 | 3.7 | 97 | 697 | 5.2 |
| 13 | 40 | 1 | 1060 | 4.0 | 98 | 750 | 4.9 |
| 14 | 100 | 1 | 1140 | 3.3 | 98 | 736 | 4.0 |
| 15 | 40 | 2 | 955 | 2.6 | 97 | 522 | 4.5 |
| 16 | 40 | 1 | 720 | 2.9 | 98 | 662 | 4.6 |
| 17 | 10 | 1 | 670 | 3.1 | 98 | 727 | 3.4 |

## Claims

1. A catalyst comprising an organonickel compound, an alkyl aluminum compound, and a boron trifluoride-phenol complex.

2. The catalyst of Claim 1 wherein the phenol has the formula:

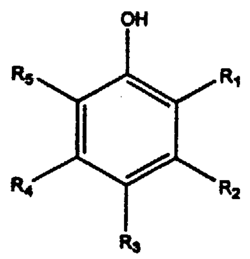

wherein $R_1$ through $R_5$ at each occurrence are the same or different and represent hydrogen, alkyl, cycloalkyl, aryl, alkaryl, and arylalkyl, each containing up to 30 carbon atoms.

3. The catalyst of Claim 1 or 2 wherein the organonickel compound is selected from the group consisting of a nickel salt of a carboxylic acid or an organic complex compound of nickel, and mixtures thereof; the alkyl aluminum is selected from the group consisting of triethylaluminum, triisobutylaluminum, diethylaluminum chloride, partially hydrolyzed diethylacluminum chloride, methylaluminoxane, modified methylaluminoxane, and mixtures thereof; and the boron trifluoride-phenol complex is selected from the group consisting of phenol, o-cresol, p-cresol, 2-ethylphenol, 2-propylphenol, 2-isopropylphenol, 2-sec-butylphenol, 2-tert-butylphenol, 2-cyclopentylphenol, 3-isopropylphenol, 3-sec-butylphenol, 3-tertbutylphenol, 3-pentylphenol, 3-pentadecylphenol, 4-ethylphenol, 4-propylphenol, 4-isopropylphenol, 4-sec-butylphenol, 4-tert-butylphenol, 4-cyclopentylphenol, 4-tert-amylphenol, 4-octylphenol, 4-(1-adamantyl)phenol, 2,3-dimethylphenol, 5,6,7,8-tetrahydro-1-naphthol, 2,6-dimethylphenol, 2,4,6-trimethylphenol, 2,4,6-triphenylphenol, 1-naphthol, 2-naphthol, 2-phenolphenol, 4-phenylphenol, 4-benzylphenol, 2,3,4,5,6-pentamethylphenol, and mixtures thereof.

4. The catalyst of any one of the preceding Claims wherein the mole ratio of nickel:aluminum:boron ranges from 1:1:0.5 to 1:500:1500.

5. The catalyst of any one of the preceding Claims wherein the catalyst is supported.

6. The catalyst of Claim 5 wherein the nickel:support ratio ranges from 0.05 mmol of nickel per gram of support to 2 mmol nickel per gram of support.

7. The catalyst of Claim 5 or 6 wherein the support is selected from the group consisting of carbon black, silica, porous crosslinked polystyrene, porous crosslinked polypropylene, alumina, activated carbon, magnesium chloride, and mixtures thereof.

8. The catalyst of any one of the preceding Claims whrein the organonickel compound is a nickel(II)carboxylate, the alkylaluminum compound is a trialkylaluminum, and the boron-trifluoride-phenol complex is $BF_3 \cdot (C_6H_5OH)_2$.

9. A process for preparing a polybutadiene comprising polymerizing butadiene in a gas fluidized reactor under polymerization conditions in the presence of an inert particulate material using a catalyst as defined in any one of the preceding Claims.

10. The process of Claim 9 wherein the inert particulate material is selected from the group consisting of carbon black, silica, clay, talc, activated carbon, and mixtures thereof; wherein the polymerization is conducted at temperatures ranging from 20 degrees C to 120 degrees C; and pressure ranging from 69 to 690 kPa (10 to 100 psi).

11. The process of Claim 9 or 10 wherein the polymerization is conducted below the dew point temperature of butadiene.

12. The process of any one of Claims 9 to 11 wherein there is employed an inert fluidized gas selected from the group consisting of nitrogen, argon, a $C_1$-$C_{20}$ alkane, and mixtures thereof.

European Patent Office

# EUROPEAN SEARCH REPORT

Application Number
EP 00 30 9685

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 07745 A (UNION CARBIDE CHEM PLASTIC) 18 February 1999 (1999-02-18)<br>* abstract; claims 1,11-13; examples 22,23,27 *<br>* page 10, last paragraph - page 11, paragraph 1 *<br>* page 20, paragraph 1 *<br>--- | 1-12 | C08F4/70<br>C08F36/06<br>C08F2/34 |
| X | WO 97 08211 A (GOODYEAR TIRE & RUBBER) 6 March 1997 (1997-03-06)<br>* abstract; claim 23; examples 3-9 *<br>* page 30, line 1 - line 14 *<br>--- | 1-12 | |
| X | GB 1 202 118 A (GOODYEAR TIRE & RUBBER CO.) 12 August 1970 (1970-08-12)<br>* claims 1,5,7; example III *<br>* page 3, line 25 - line 41 *<br>----- | 1-4,8 | |
| | | | TECHNICAL FIELDS SEARCHED (Int.Cl.7) |
| | | | C08F |

The present search report has been drawn up for all claims

| Place of search | Date of completion of the search | Examiner |
|---|---|---|
| THE HAGUE | 22 February 2001 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 9685

This annex lists the patent family membersrelating to the patent documents cited in the above-mentioned European search report.
The members are as contained in the European Patent Office EDP file on
The European Patent Office is in no way liable for these particulars which are merely given for the purpose of information.

22-02-2001

| Patent document cited in search report | Publication date | Patent family member(s) | Publication date |
|---|---|---|---|
| WO 9907745 A | 18-02-1999 | US 6004677 A | 21-12-1999 |
| | | AU 8697198 A | 01-03-1999 |
| | | BR 9811087 A | 29-08-2000 |
| | | CN 1274363 T | 22-11-2000 |
| | | EP 1001995 A | 24-05-2000 |
| | | PL 338580 A | 06-11-2000 |
| | | ZA 9806726 A | 02-02-1999 |
| WO 9708211 A | 06-03-1997 | US 5652304 A | 29-07-1997 |
| | | AU 6951096 A | 19-03-1997 |
| | | CA 2212729 A | 06-03-1997 |
| | | EP 0805823 A | 12-11-1997 |
| | | US 5919876 A | 06-07-1999 |
| | | US 6066705 A | 23-05-2000 |
| | | US 5859156 A | 12-01-1999 |
| | | TW 387903 B | 21-04-2000 |
| GB 1202118 A | 12-08-1970 | BE 725229 A | 16-05-1969 |
| | | DE 1809854 A | 17-07-1969 |
| | | FR 1597689 A | 29-06-1970 |
| | | NL 6817953 A | 17-06-1969 |
| | | US 3487063 A | 30-12-1969 |

EPO FORM P0459

For more details about this annex : see Official Journal of the European Patent Office, No. 12/82